# EUROPÄISCHE PATENTSCHRIFT

(11) **EP 0 975 500 B1**
(45) Veröffentlichungstag und Bekanntmachung des Hinweises auf die Patenterteilung: **20.11.2002**
(21) Anmeldenummer: 98917106.1
(22) Anmeldetag: 02.04.1998
(51) Int. Cl.: B60T 8/36, H02K 11/00, F04B 17/03

(54) **MOTORGETRIEBENES AGGREGAT**
MOTOR-DRIVEN UNIT
GROUPE ACTIONNE PAR MOTEUR

(30) Priorität: 18.04.1997 DE 19716187
(43) Veröffentlichungstag der Anmeldung: 02.02.2000
(73) Patentinhaber: Continental Teves AG & Co. oHG, 60488 Frankfurt am Main (DE)
(72) Erfinder: TRAUTMANN, Frank, D-61462 Königstein (DE)
(74) Vertreter: Portwich, Peter
(86) Internationale Anmeldenummer: EP9801905
(87) Internationale Veröffentlichungsnummer: WO98047748

(56) Entgegenhaltungen:
- EP-A- 0 364 816
- EP-A- 0 584 682
- US-A- 4 303 097
- US-A- 5 449 226
- PATENT ABSTRACTS OF JAPAN vol. 095, no. 005, 30.Juni 1995 & JP 07 047945 A (NISSIN KOGYO KK), 21.Februar 1995,

## Beschreibung

Die Erfindung betrifft ein motorgetriebenes Aggregat für eine Kraftfahrzeug-Bremsanlage mit den Merkmalen des Oberbegriffs des Patentanspruchs 1.

Aus der gattungsgemäßen Patentschrift US 5,449,226 ist ein motorgetriebenes Aggregat für eine Kraftfahrzeugbremsanlage bekannt, das einen Gehäusekörper für Magnetventile und einen an einer ersten Seite des Gehäusekörpers angeordneten Deckel aufweist, in dem insbesondere elektrische Bauelemente vorgesehen sein können. An einer der ersten Seite gegenüberliegenden Seite des Gehäusekörpers ist dabei ein Motorengehäuse angeordnet.

Derartige Aggregate sind vielfach im Gebrauch und erfüllen ihre Funktion in zufriedenstellender Weise. Zur Befestigung des Deckels an dem Gehäusekörper dienen üblicherweise Zylinderschrauben, welche bei der Montage des Aggregates mit einer bestimmten Vorspannkraft beaufschlagt werden. Es hat sich gezeigt, daß die Befestigungsschrauben im Laufe der Zeit zu einem mehr oder weniger großen Vorspannkraftverlust tendieren. Weil grundsätzlich mehrere Befestigungsschrauben notwendig sind, läßt sich also ein Unterschied in der Vorspannkraft und im Verlust der Vorspannkraft zwischen einzelnen Schrauben nicht vermeiden. Folge dieses Sachverhaltes ist eine ungleichmäßige Anpreßkraft des Deckels an den Gehäusekörper und infolge dessen eine ungleichmäßige Dichtwirkung. Die Nachteile der ungleichmäßigen Dichtwirkung treten in gleicher Weise bei der Befestigung eines Motorengehäuses auf einer dem Deckel gegenüberliegenden Seite des Gehäusekörpers auf.

Aufgabe der vorliegenden Erfindung ist es daher, ein Aggregat bereitzustellen, dessen Bauelemente Deckel, Gehäusekörper und Motorengehäuse mit verbesserter und insbesondere vergleichmäßigter Dichtwirkung aneinander befestigbar sind. Eine weitere Aufgabe der Erfindung ist eine Vereinfachung und Kostenreduzierung des Montageprozesses.

Diese Aufgaben werden dadurch gelöst, daß bei einem gattungsgemäßen Aggregat zumindest ein Befestigungsmittel zwischen Motorengehäuse und Deckel derart vorgesehen ist, daß diese mit gleicher Anpreßkraft an dem Gehäusekörper befestigbar sind. Weil die beiden Bauelemente Motorengehäuse und Deckel also mit gleicher Anpreßkraft auf den Gehäusekörper gedrückt werden, erfolgt auch eine homogene Dichtwirkung ohne wesentliche Unterschiede zwischen der einen oder der anderen Seite. Darüber hinaus führt eine Anordnung mit den Merkmalen des Anspruches 1 zu einer Verringerung der notwendigen Befestigungsmittel, weil ein jedes Befestigungsmittel sowohl das Motorengehäuse als auch den Deckel fixiert.

Eine Ausführungsform gemäß Patentanspruch 2 ist mit dem Vorteil verbunden, daß an dem äußeren Rand des Gehäusekörpers keine Befestigungsmittel vorstehen. Es ergibt sich also eine geschlossene Kontur mit glatten Flächen, bei der die notwendigen Befestigungsmittel platzsparend angeordnet sind.

Gemäß einer vorteilhaften Weiterbildung der Erfindung sind Dehnschrauben als Befestigungsmittel vorgesehen, welche im Laufe der Zeit einen besonders geringen Vorspannkraftverlust aufweisen.

Bei einer weiteren vorteilhaften Ausführungsform der Erfindung besteht der Deckel aus Kunststoff und ist mit einer eingespritzten Buchse zum Eingriff des Befestigungsmittels versehen. Diese Merkmale erleichtern die Montage, weil eine separate Zuführung von Deckeln und Befestigungsmuttern von unterschiedlichen Seiten entfallen kann. Buchse und Deckel bilden also eine selbständig handhabbare Baueinheit.

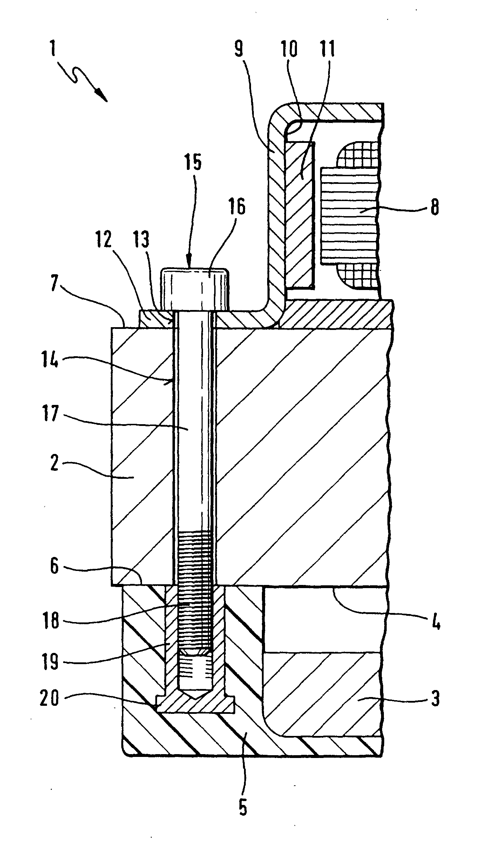

Die Erfindung wird nachstehend anhand der Figurenbeschreibung und der Zeichnung näher erläutert. In der Zeichnung zeigt die einzige Figur in Seitenansicht einen schematischen Teilschnitt durch ein motorgetriebenes Aggregat gemäß der Erfindung.

Ein motorgetriebenes Aggregat 1 zur Bremsdruckmodulation bei einer Kraftfahrzeugbremsanlage umfaßt einen Gehäusekörper 2 mit hier nicht weiter interessierenden und daher nicht gezeichneten Magnetventilen. Die Magnetventile erhalten ihre elektrischen Signale von einer Elektronikeinheit 3, welche auf einer ersten Seite 4 des Gehäusekörpers 2 angeordnet ist. Die Elektronikeinheit 3 wird von einem wannenförmigen Deckel 5 übergriffen und von der Umgebung abgeschirmt. Ferner liegt der Deckel 5 mit einer ebenen Anlagefläche 6 auf der ersten Seite 4 des Gehäusekörpers 2 auf. Es versteht sich, daß für eine verbesserte Dichtungswirkung grundsätzlich bekannte und in der Figur nicht dargestellte Dichtungsmittel zwischen der ersten Seite 4 und der Anlagefläche 6 vorgesehen sein können, ohne den Erfindungsgedanken zu verlassen.

Auf einer der ersten Seite 4 gegenüberliegenden Seite 7 des Gehäusekörpers 2 befindet sich ein Elektromotor, welcher eine Hydraulikpumpe im Inneren des Gehäusekörpers 2 antreibt und die Kraftfahrzeugbremsanlage mit dem notwendigen Druck und Volumenstrom des Druckmittels versorgt. Der Elektromotor verfügt u.a. über einen Rotor 8, welcher auf einer nicht gezeichneten Motorwelle angeordnet ist. An einem im wesentlichen topfförmigen Motorengehäuse 9 sind an dessen innerer Wandung 10 Permanentmagneten 11 befestigt, die mit dem Rotor 8 zusammenwirken. Zur Anlage an dem Gehäusekörper 2 besitzt das Motorengehäuse 9 einen Flansch 12, der wie in der Figur dargestellt unmittelbar, oder mittelbar unter Zwischenordnung eines Dichtungsmittels, auf der Seite 7 aufliegt. Der Flansch 12 und der Gehäusekörper 2 sind mit zueinander fluchtenden Durchgangsbohrungen 13,14 versehen, und das Befestigungsmittel 15 durchgreift die beiden Durchgangsbohrungen 13,14 und erstreckt sich ausgehend von der Flanschseite des Motorengehäuses 9 bis hin zu dem Deckel 5. Das Befestigungsmittel 15 ist gemäß dem gezeichneten bevorzugten Ausführungsbeispiel eine Schraube und verfügt über einen Kopf 16, welcher an dem Flansch 12 angreift. Ein Schaft 17 der Schraube durchgreift die beiden Durchgangsbohrungen 13,14 und greift mit einem Gewindeabschnitt 18 in den Deckel 5 ein. Als Befestigungsmittel 15 kommen beispielsweise auch Dehnschrauben in Betracht, welche den Vorteil aufweisen, daß nach der Montage im Laufe der Zeit nur ein geringer Vorspannkraftverlust eintritt. Das Befestigungsmittel 15 befestigt den Deckel 5 und das Motorengehäuse 9 derart an dem Gehäusekörper 2, daß diese unter Vorspannung und mit der gleichen Anpreßkraft an dem Gehäusekörper 2 anliegen. Die Befestigung der beiden Bauelemente erfolgt also mit einem gemeinsamen Befestigungsmittel 15, welches die beiden Bauelemente gegeneinander verspannt und gegen den mittig angeordneten Gehäusekörper 2 drückt. Weil bei motorgetriebenen Aggregaten gemäß dem Stand der Technik für jedes Bauelement separate Befestigungsmittel vorgesehen sind, ergibt sich gemäß der Erfindung durch die Anordnung gemeinsamer Befestigungsmittel 15 eine Materialeinsparung. Ferner verringert sich der Montageaufwand, weil eine geringere Anzahl von Befestigungsmitteln 15, beispielsweise Schrauben, notwendig ist und die Schrauben ausschließlich von einer Montageseite eingedreht werden können. Schließlich ist von ganz wesentlicher Bedeutung, daß sich eine Vergleichmäßigung der Dichtwirkung ergibt, weil sowohl der Dekkel 5 als auch das Motorengehäuse 9 mit gleicher Kraft an den Gehäusekörper 2 angepreßt werden.

Ganz grundsätzlich kann ein Befestigungsmittel 15 nach Art einer Schraube unmittelbar in den Deckel 5 eingedreht werden. Die Figur zeigt ein bevorzugtes Ausführungsbeispiel, bei dem der Deckel 5 aus Kunststoff besteht und zusätzlich eine Buchse 19 mit einem Gewinde in diesen eingeformt ist. Das Befestigungsmittel 15 greift mit dem Gewindeabschnitt 18 in das Gewinde der Buchse 19 ein. Diese bevorzugte Ausführungsform eignet sich insbesondere für hohe Anpreßkräfte mit entsprechend großer Schraubenvorspannkraft. Beispielsweise besteht die Buchse aus Metall. Es versteht sich, daß die Buchse 19 einen Abschnitt 20 aufweist, der gegen Verdrehung gesichert ist. Für diesen Zweck besitzt der Abschnitt 20 eine Verzahnung oder einen Mehrkant, der einer Verdrehung formschlüssig entgegensteht.

Es versteht sich weiterhin, daß das motorgetriebene Aggregat 1 mehrere Befestigungsmittel 15 aufweisen kann, die in regelmäßigen Abschnitten außermittig im Bereich des Flanschs 12 des Motorengehäuses 9 angeordnet sind. Für eine sichere und flüssigkeitsdichte Befestigung reicht allerdings bereits ein einziges Befestigungsmittel aus, welches fluchtend zu einer Symmetrieachse von Motorengehäuse 9 und Deckel 5 vorgesehen ist. Das Befestigungsmittel bildet also quasi die Symmetrieachse der Motorwelle.

## Patentansprüche

1. Motorgetriebenes Aggregat (1) für eine Kraftfahrzeugbremsanlage, mit einem Gehäusekörper (2) für Magnetventile und mit einem an einer ersten Seite (4) des Gehäusekörpers (2) angeordneten Deckel (5), insbesondere für elektrische Bauelemente, wobei an einer der ersten Seite (4) gegenüberliegenden Seite (7) des Gehäusekörpers (2) ein Motorengehäuse (9) angeordnet ist, **dadurch gekennzeichnet, daß** zumindest ein Befestigungsmittel (15) zwischen Deckel (5) und Motorengehäuse (9) derart vorgesehen ist, daß Deckel (5) und Motorengehäuse (9) mit gleicher Anpreßkraft an dem Gehäusekörper (2) befestigbar sind.

2. Motorangetriebenes Aggregat nach Anspruch 1, **dadurch gekennzeichnet, daß** das Befestigungsmittel (15) den Gehäusekörper (2) durchgreift.

3. Motorangetriebes Aggregat nach einem oder mehreren der vorhergehenden Ansprüche, **dadurch gekennzeichnet, daß** eine Dehnschraube als Befestigungsmittel (15) vorgesehen ist.

4. Motorangetriebenes Aggregat nach einem oder mehreren der vorhergehenden Ansprüche, **dadurch gekennzeichnet, daß** der Deckel (5) aus Kunststoff besteht und mit einer eingeformten Buchse (19) zum Eingriff des Befestigungsmittels (15) versehen ist.

5. Motorangetriebenes Aggregat nach einem oder mehreren der vorhergehenden Ansprüche, **dadurch gekennzeichnet, daß** ein einziges Befestigungsmittel (15) fluchtend zu einer Symmetrieachse von Motorgehäuse (9) und Deckel (5) vorgesehen ist.

## Claims

1. Motor-driven unit (1) for an automotive vehicle brake system which includes a housing body (2) for magnetic valves and a cover (5) arranged on a first side (4) of the housing body (2), especially for electrical structural elements, with a motor housing (9) being arranged on a side (7) of the housing body (2) opposite to the first side (4),
**characterized in that** at least one attachment means (15) is provided between the cover (5) and the motor housing (9) in such a manner that the cover (5) and the motor housing (9) can be attached to the housing body (2) with the same contact force.

2. Motor-driven unit as claimed in claim 1,
**characterized in that** the attachment means (15) extends through the housing body (2).

3. Motor-driven unit as claimed in any one or more of the preceding claims,
**characterized in that** a reduced-shaft bolt is provided as an attachment means (15).

4. Motor-driven unit as claimed in any one or more of the preceding claims,
**characterized in that** the cover (5) is made of plastics and includes a bushing (19) shaped for engagement by the attachment means (15).

5. Motor-driven unit as claimed in any one or more of the preceding claims,
**characterized in that** one single attachment means (15) is provided in alignment with an axis of symmetry between the motor housing (9) and the cover (5).

## Revendications

1. Groupe (1) actionné par moteur pour un système de freinage de véhicule automobile, comportant un corps de boîtier (2) pour des soupapes magnétiques et comportant un couvercle (5) disposé sur un premier côté (4) du corps du boîtier (2), en particulier pour des composants électriques, un carter moteur (9) étant disposé sur un côté (7) opposé au premier côté (4), du corps du boîtier (2), **caractérisé en ce qu'**au moins un moyen de fixation (15) est prévu entre le couvercle (5) et le carter moteur (9) de manière que le couvercle (5) et le carter moteur (9) puissent être fixés au corps du boîtier (2) avec la même force de pression.

2. Groupe actionné par moteur selon la revendication 1, **caractérisé en ce que** le moyen de fixation (15) traverse le corps du boîtier (2).

3. Groupe actionné par moteur selon une ou plusieurs des revendications précédentes, **caractérisé en ce qu'**une vis à tige allégée est prévue comme moyen de fixation (15).

4. Groupe actionné par moteur selon une ou plusieurs des revendications précédentes, **caractérisé en ce que** le couvercle (5) est en matière plastique et est pourvu d'une douille (19) formée à l'intérieur pour l'engagement du moyen de fixation (15).

5. Groupe actionné par moteur selon une ou plusieurs des revendications précédentes, **caractérisé en ce qu'**un seul moyen de fixation (15) est prévu aligné avec un axe de symétrie du carter moteur (9) et du couvercle (5).
